**Europäisches Patentamt**

**European Patent Office**

**Office européen des brevets**

(19)

(11) Veröffentlichungsnummer: **0 234 433**

**A1**

(12) # EUROPÄISCHE PATENTANMELDUNG

(21) Anmeldenummer: **87101995.6**

(22) Anmeldetag: **12.02.87**

(51) Int. Cl.³: **B 01 D 53/34**

(30) Priorität: **18.02.86 DE 3605006**

(43) Veröffentlichungstag der Anmeldung:
**02.09.87** Patentblatt **87/36**

(84) Benannte Vertragsstaaten:
**BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Eichhorn, Hans-Dieter, Dr.**
**47 Davenport Road**
**Cleveland TS 15 9 NT(GB)**

(72) Erfinder: **Mross, Wolf Dieter, Dr.**
**Anselm-Feuerbach-Strasse 21**
**D-6710 Frankenthal(DE)**

(72) Erfinder: **Schwarzmann, Matthias, Dr.**
**Carl-Bosch-Strasse 54**
**D-6703 Limburgerhof(DE)**

(54) **Verfahren zur Reinigung von Gasen.**

(57) Die vorliegende Erfindung betrifft ein Verfahren zur Reinigung eines mit sauren Verbindung verunreinigten Gases, bei dem das Gas durch ein Festbett von geformter, alkalihaltiger tonerde geleitet wird.

EP 0 234 433 A1

Croydon Printing Company Ltd.

## Verfahren zur Reinigung von Gasen

Die vorliegende Erfindung betrifft ein Verfahren zur Reinigung eines mit sauren Verbindungen verunreinigten Gases, bei dem das Gas durch ein Festbett von geformter, alkalihaltiger Tonerde geleitet wird.

Die Notwendigkeit für eine Reinigung von mit sauren Verbindungen verunreinigten Gasströmen ergibt sich bei einer Vielzahl von Anwendungen. Besonders wichtig ist eine solche Reinigung beispielsweise bei chemischen Prozessen, in deren Verlauf solche sauren Verbindungen unerwünschte Wirkungen, z.B. Korrosion oder eine Katalysatorschädigung, hervorrufen können. Dabei genügen oft schon geringe Spuren dieser Verbindungen, z.B. in Konzentrationsbereichen von wenigen Teilen pro einer Million Teile des Gasstromes, um solche unerwünschten Schäden hervorzurufen.

Beispiele für solche sauren Verbindungen sind Halogenverbindungen wie Bromide, Iodide, Fluoride, besonders jedoch Chloride, insbesondere die entsprechenden Halogenwasserstoffverbindungen und dabei besonders Chlorwasserstoff. Als weitere Beispiele können u.a. Schwefelwasserstoff, Schwefeldioxid, Schwefeltrioxid oder Stickoxide genannt werden. Diese Verbindungen liegen in dem zu reinigenden Gas im allgemeinen in einer Konzentration von etwa 1 bis etwa 1 000 Vol.-ppm vor.

Für die Reinigung von solchen mit sauren Verbindungen verunreinigten Gase sind bereits verschiedene Methoden vorgeschlagen worden, z.B. Absorptionsverfahren, wie Wäschen mit Natronlauge, Kalkmilch, wäßrigen Sulfit-, Bisulfit- oder Thiosulfatlösungen (Staub-Reinhalt. Luft, 1976, 36 (8), 354-61) oder Absorption mit ZnO-haltigen Feststoffen, oder z.B. Adsorptionsverfahren an Aktivkohlefiltern

(US-Patentschrift 4 215 096). Diese genannten üblichen Verfahren weisen allerdings oft Nachteile auf. So können z.B. Wäschen sehr aufwendig und teuer sein und den Bedingungen, bei denen die genannten Verfahren betrieben werden sollen, wie z.B. hohe Drücke und/oder hohe Temperaturen, schlecht anzupassen sein oder gar, zumal bei relativ kleinen Konzentrationen der schädlichen Inhaltsstoffe, keine hinreichende Reinigung gewährleisten.

Werden dagegen Feststoffe in stückiger Form zur Reinigung dieser Gasströme verwendet, so ergibt sich als Nachteil, daß diese Feststoffschüttungen mit einem großen Druckverlust behaftet sind.
Weiterhin zeigen die genannten Feststoffe oft schon nach kurzer Zeit einen Zerfall der Feststoffteile zu kleineren Partikeln, der zu einer Leistungsverminderung des gesamten Prozesses führen kann, so daß die Schüttung unter hohen Kosten ausgewechselt bzw. erneuert werden muß.

Der vorliegenden Erfindung lag daher die Aufgabe zugrunde, ein Verfahren zur Reinigung eines mit sauren Verbindungen, vorzugsweise Halogenverbindungen, besonders bevorzugt Chloride, z.B. Chlorwasserstoff, verunreinigten Gases zu schaffen, welches über lange Zeit mit geringem Aufwand hoher Kapazität und geringem Druckverlust eine Abreicherung dieser schädlichen Komponenten auf sehr geringe Konzentrationen, beispielsweise von weniger als 1 Vol.-ppm ermöglicht.

Diese Aufgabe wird in vorteilhafter Weise gelöst in einem Verfahren zur Reinigung eines mit sauren Verbindungen verunreinigten Gases, welches dadurch gekennzeichnet ist, daß das Gas durch ein Festbett von geformter, alkalihaltiger Tonerde geleitet wird.

Als saure Verbindungen, die aus den damit verunreinigten Gasen nach dem erfindungsgemäßen Verfahren zu entfernen sind, kommen beispielsweise in Betracht Halogenverbindungen, z.B. organische Halogenverbindungen, beispielsweise Alkylhalogenide wie Methylchlorid, Methylbromid, Methylenchlorid, Chloroform, Ethylchlorid sowie anorganische Halogenverbindungen, z.B. Halogenide wie Bromide, Jodide, Fluoride und insbesondere Chloride, insbesondere die Halogenwasserstoffe und dabei besonders Chlorwasserstoff. Weitere saure Verbindungen, die nach dem erfindungsgemäßen Verfahren entfernt werden können, sind beispielsweise Schwefelwasserstoff, Schwefeldioxid, Schwefeltrioxid und/oder Stickoxide.

Die Konzentration dieser Verunreinigungen in dem zu reinigenden Gas betragen im allgemeinen etwa 0,1 bis 1000 Vol.-ppm, vorzugsweise 0,1 bis 500 Vol.-ppm, insbesondere 0,1 bis 100 Vol.--ppm. Mit besonderem Vorteil wird das neue Verfahren zur Reinigung von verunreinigten Gasen verwendet, die die sauren Verbindungen nur in sehr niedrigen Konzentrationen, z.B. in Konzentrationen von 0,1 bis 15 Vol.-ppm, enthalten. Die Abreicherung der aus dem Gas zu entfernenden sauren Verbindungen erfolgt im allgemeinen auf Konzentrationen von weniger als 0,05 Vol.-ppm.

Das erfindungsgemäße Verfahren wird beispielsweise angewendet zur Reinigung von mit sauren Verbindungen verunreinigten Gasen, wie sie bei chemischen Prozessen erhalten werden.

Beispiele für zur reinigende Gasströme bei chemischen Prozessen sind solche, die aus Reformeranlagen bei erhöhten Temperaturen durch katalytische Umsetzung von Kohlenwasserstoffen mit Wasserdampf erhalten werden (vgl. z.B. Ullmanns Encyklopädie der technischen Chemie, 4. Auflage, Band 7, Seiten 473 und 474).

0234433

O.Z. 0050/38283

Die erhaltenen, in der Regel Wasserstoff, Methan, Wasserdampf, Kohlenmonoxid, Kohlendioxid und Stickstoff enthaltenden Gase können in geringen Mengen saure Verbindungen enthalten. Solche Gasströme kommen in der Regel in nachfolgenden Prozeßstufen mit kupferhaltigen Katalysatoren in Kontakt, die schon bei der Anwesenheit von geringen Spuren dieser sauren Verbindungen sehr empfindlich reagieren und in kurzer Zeit ihre katalytische Aktivität verlieren können, so daß aus diesem Grunde eine sorgfältige Reinigung dieser Gasströme erforderlich ist. Zweckmäßig werden bei der Reinigung die sauren Verbindungen im Gasstrom bis zu einer Konzentration von weniger als 0,1 Vol.-ppm abgereichert.

Für die vorliegende Erfindung sind auch noch andere Anwendungen als die bei chemischen Prozessen möglich. Als Beispiel dafür kann die Luftaufbereitung für Lüftungsanlagen, die z.B. Räume mit empfindlichen elektronischen Geräten mit Luft versorgen, genannt werden. Auch bei solchen Anwendungen müssen die genannten sauren Verbindungen aus Korrosionsgründen praktisch vollständig aus der Luft entfernt werden.

Gemäß dem erfindungsgemäßen Verfahren wird das zu reinigende Gas durch ein Festbett geleitet, welches eine geformte alkalihaltige Tonerde enthält. Ein besonderer Vorteil des neuen Verfahrens gegenüber den bekannten Verfahren besteht darin, daß es z.B. bezüglich Druck und Temperatur praktisch keine Einschränkungen gibt. So kann die Temperatur des Festbetts bzw. des Gases innerhalb weiter Grenzen variieren und liegt im allgemeinen zwischen $0^{\circ}C$ und $600^{\circ}C$, vorzugsweise $0^{\circ}C$ und $500^{\circ}C$, insbesondere $10^{\circ}C$ und $480^{\circ}C$. Es sind jedoch auch Anwendungen möglich, bei denen tiefere bzw. höhere Temperaturen vorliegen. Einschränkungen können sich von Fall zu Fall dann ergeben, wenn der Taupunkt des Gasstromes unterschritten wird oder durch zu hohe Temperaturen Gefügeänderungen in der Tonerde hervorgerufen werden könnten. Auch der Druck, bei dem dieses Verfahren betrieben wird, ist für die Reinigung des Gasstromes nicht von Bedeutung und kann sich deshalb ganz nach den spezifischen Gegebenheiten, bei den dieses neue Verfahren angewendet werden soll, richten. Im allgemeinen werden Drücke zwischen 0,5 und 1000 bar, vorzugsweise 0,5 und 500 bar angewendet. Werden z.B. Reformergase gereinigt, wird aufgrund der verfahrensspezifischen Gegebenheiten einer Reformeranlage der Druck etwa zwischen 10 und 100 bar, vorzugsweise zwischen 20 und 50 bar, liegen. Bei anderen Anwendungsgebieten, z.B. die Luftreinigung bei Lüftungsanlagen, wird der Druck des Gasstromes niedriger und im allgemeinen zwischen 0,5 und 5 bar liegen.

Die Raumgeschwindigkeit des zu reinigenden Gases bei Durchleiten durch das Katalysator-Festbett gemäß dem neuen Verfahren (Volumenteile Gasstrom bezogen auf Normbedingungen pro Volumenteil Katalysator und Stunde) kann problemlos in weiten Grenzen, z.B. zwischen 1 und 20 000 variiert werden. Vorzugsweise wird die Raumgeschwindigkeit etwa zwischen 100 und 5 000 liegen.

Die für dieses Verfahren einzusetzenden Tonerden (Aluminiumoxide) weisen im allgemeinen eine spezifische Oberfläche zwischen 0,1 und 350 $m^2$/g auf. Das Porenvolumen dieser Aluminiumoxide liegt dabei zweckmäßig zwischen 0,1 und 1 $cm^3$/g. Bei den Aluminiumoxiden handelt es sich in der Regel um das $\gamma$-Aluminiumoxid (gamma), das $\eta$-Aluminiumoxid (eta), das $\vartheta$-Aluminiumoxid (theta), das $\delta$-Aluminiumoxid (delta), das $\varkappa$-Aluminiumoxid (kappa), das $\chi$-Aluminiumoxid (chi) sowie das $\alpha$-Aluminiumoxid (alpha). Die einzelnen Aluminiumoxide sind durch ihre Kristallstrukturen definiert und werden durch ihre Röntgendiagramme charakterisiert (gemäß ASTM-Kartei). Im allgemeinen besteht die Tonerde im wesentlichen aus einem oder mehreren dieser Aluminiumoxide. Der Alkaligehalt der erfindungsgemäß zu verwendenden

alkalihaltigen Tonerde liegt im allgemeinen zwischen 1 und 20 Gew.-%, vorzugsweise zwischen 2 und 15 Gew.-%, insbesondere zwischen 4 und 10 Gew.-% Alkalimetall, bezogen auf die Gesamtmasse aus Tonerde und Alkalimetallverbindung. Als Alkalimetall kommen die Elemente Lithium, Natrium, Kalium, Rubidium und Caesium in Betracht, vorzugsweise wird jedoch eine natriumhaltige Tonerde verwendet.

Die Herstellung der erfindungsgemäß zu verwendenden alkalihaltigen Tonerde kann auf verschiedenen Wegen erfolgen.

Beispielsweise kann eine bereits geformte Tonerde mit alkalihaltigen Lösungen getränkt und anschließend wärmebehandelt werden. Wird dagegen eine pulverförmige Tonerde getränkt, kann die Formgebung auch nach der Alkaliimprägnierung durchgeführt werden. Andererseits können auch Tonerdeausgangsmaterialien, z.B. Aluminiumoxidhydrate mit alkalihaltigen Lösungen getränkt, getrocknet, verformt und danach durch Temperaturbehandlung in die gewünschte Tonerde, z.B. $\gamma$-Aluminiumoxid, übergeführt werden. Einzelne Verfahrensschritte können dabei auch vertauscht werden, z.B. kann der Verformungsschritt auch nach der Temperaturbehandlung durchgeführt werden.

Die zum Imprägnieren verwendeten alkalimetallhaltigen Lösungen sind beispielsweise wäßrige und/oder alkoholische Lösungen von einer oder mehreren Alkalimetallverbindungen, die bei Wärmebehandlung in die entsprechenden Alkalimetalloxide übergehen. Geeignete Alkalimetallverbindungen sind z.B. Alkalimetallhydroxide, Alkalimetallnitrate, Alkalimetallcarbonate bzw. Alkalimetallhydrogencarbonate oder organische Alkalimetallverbindungen, z.B. die Alkalimetall-Oxalate, -Tartrate, -Acetylacetonate. Als alkoholische Lösungsmittel kommen beispielsweise Methanol, Ethanol, n-Propanol, Isopropanol, n-Butanol, Isobutanol, Ethylenglykol in

O.Z. 0050/38283

Betracht.

Die Konzentration der Alkalimetallverbindungen in der Tränklösung richtet sich nach der gewünschten Konzentration der
Alkaliverbindung in der Tonerde. Gegebenenfalls muß zum Einreichen
von höheren Alkalimetallkonzentrationen in der Tonerde die
Tränkung mehrmals erfolgen. Enthält die verwendete Tonerde bzw.
das verwendete Tonerdehydrat bereits Alkali, kann die
Konzentration der Alkalimetallverbindung in der Tränklösung
entsprechend geringer gewählt werden.

Als mögliche Formen für die alkalihaltigen Tonerden kommen
beispielsweise Ringe, Sterne, Kugeln, Säulen, Ringeformen
mit in Radialebenen angeordneten Trennwänden, Wabenkörper
in Betracht. Besonders bevorzugt sind Formen, die bei
möglichst hoher geometrischer Oberfläche dem durchströmenden
Gasstrom möglichst wenig Widerstand entgegensetzen. Die
bevorzugten Formen sind deshalb Kugeln, Ringe, Ringe mit
Zwischenwänden, sternartige Formen sowie Wabenkörper.

Werden Kugeln eingesetzt, so weisen diese im allgemeinen
einen Durchmesser zwischen 2 und 10 mm, bevorzugt zwischen
3 und 7 mm auf. Ringe werden zweckmäßig mit einem Außendurchmesser im Bereich von 3 bis 20 mm, einem Innendurchmesser
im Bereich von 2 bis 16 mm und einer Höhe im Bereich von 3 bis
20 mm verwendet. Säulen weisen im allgemeinen einen Durchmesser
von 3 bis 20 mm und eine Höhe von 3 bis 20 mm auf.

Zur Erhöhung der Festigkeit der Ringe bzw. zur Erhöhung der
geometrischen Oberfläche der Ringe können im Ring noch drei
oder mehr Zwischenwände vorhanden sein, beispielsweise drei
Trennwände, die in diametralen, zueinander senkrechten Ebenen
angeordnet sind und zwischeneinander etwa gleiche Winkel
bilden. Enthält der Ring 4 zueinander senkrechte Trennwände,
werden sie im Querschnitt zweckmäßig ein Kreuz bilden. Die Ringe können auch mehr als 4 Trennwände enthalten, wobei diese ebenfalls vorzugsweise gleiche Winkel zwischeneinander bilden.

Bei Einsatz von Wabenkörpern können verschiedene Wabenformen verwendet werden. Die Grundfläche kann beispielsweise kreisförmig, oval oder polygonal sein. Die Länge kann ein Vielfaches des Querschnittes erreichen. Die Körper sind von einer Vielzahl parallel verlaufender Kanäle durchzogen, deren Grundfläche ebenfalls beispielsweise kreisförmig, oval, geschwungen oder polygonal sein kann. Entscheidend für einen niedrigen Druckverlust ist der freie Querschnitt der Anströmfläche, der zweckmäßig über 40%, vorzugsweise über 50%, liegt. Die Festigkeitsanforderungen an den Wabenkörper bestimmen im wesentlichen die obere Grenze für den freien Querschnitt.

Die äußeren Dimensionen dieser Wabenkörper betragen im allgemeinen bis zu 200 mm, vorzugsweise bis zu 150 mm Kantenlänge der Grundfläche bei z.B. Quadern und ebenso etwa bis zu 200 mm, vorzugsweise bis zu 150 mm Durchmesser der Grundfläche bei Zylindern. Die Länge der Körper über den Grundflächen beträgt im allgemeinen 50 bis 1500 mm, vorzugsweise 50 bis 1000 mm. Die lichte Weite der inneren Kanäle variiert zweckmäßig zwischen 0,5 und 30 mm, vorzugsweise 0,5 und 20 mm. Die Stärke der inneren Trennwände liegt in der Regel zwischen 0,1 und 10 mm, vorzugsweise 0,1 und 5 mm.

Die Verformung selbst kann unter Verwendung verschiedener, bekannter Verfahren, wie beispielsweise Extrudieren, Tablettieren oder Granulieren erfolgen. Rohrförmige Formkörper werden bevorzugt durch Extrudieren oder Tablettieren, kugelförmige Formkörper zweckmäßig durch Granulieren oder gegebenenfalls durch Tablettieren, Waben- körper im allgemeinen durch Extrudieren hergestellt.

Die Herstellung der Formkörper geht in der Regel von einem gegebenenfalls Alkalimetall,z.B. als Alkalimetallhydroxid, enthaltenden Aluminiumoxidhydrat oder einem gegebenenfalls Alkalimetall enthaltenden Aluminiumoxid aus. Nach der Formgebung kann, falls erforderlich, gegebenenfalls nach einer zusätzlichen Temperaturbehandlung, sich noch ein Tränkschritt mit einer alkalimetallhaltigen Lösung, beispielsweise einer wäßrigen Lösung eines Alkalimetallhydroxids, anschließen.

Bei der Herstellung von Formkörpern durch Extrudierverfahren wird beispielsweise der entsprechende Ausgangsstoff in der Regel mit Wasser und/oder einem Alkohol, gegebenenfalls unter Zusatz von Alkalimetallverbindungen wie Alkalilauge sowie unter Zusatz von Extrudierhilfsmittels wie Stärke, Methylcellulose, Graphit, Polyethylenglykole, Polyvinylalkohole, Polyvinylpyrrolidone, Polyacrylester, Stearinsäure und deren Metallsalze, Naphthalin, Ammoniak, Ameisensäure, Oxalsäure, Salpetersäure entweder als einem porositätsverbessernden Mittel oder als Gleitmittel oder als Peptisierungsmittel verformt oder zunächst geknetet und anschließend verformt; bevorzugt ist dabei die Knetung und die anschließende Verformung. Die bei der Extrusion erhaltenen Formlinge werden im allgemeinen zunächst bei Temperaturen im Bereich von Raumtemperatur,z.B. von 20°C, bis 200°C getrocknet und danach zweckmäßig bei Temperaturen von im allgemeinen 200 bis 1200°C, vorzugsweise 200 bis 1100°C calciniert, wobei auch eine stufenweise Vorcalcination von Vorteil sein kann.

Insbesondere bei der Herstellung von Wabenkörpern kann es z.B. bezüglich der Festigkeit sowie des Extrusionsverhaltens von Vorteil sein, keramische Materialien, wie beispielsweise Cordierit, Bentonit oder Mullit, dem zu verformenden Ausgangs-

material beizumischen. Der Anteil dieser Zuschlagsstoffe bewegt sich im allgemeinen im Bereich von 0 bis 80 Gew.-%, vorzugsweise 2 bis 60 Gew.-%.

Bei der Herstellung von Formkörpern durch Tablettierverfahren können ein- oder mehrere Zusätze, z.B. Bindemittel und/oder Schmiermittel (Gleitmittel), verwendet werden. Als Beispiele für solche Zusätze seien Graphit, Stearinsäure und deren Metallsalze, Talkum, Methylcellulose bzw. andere modifizierte Cellulosen, Glycerinmonostearat, Polyethylenglykole, Polyvinylalkohole, Polyvinylpyrrolidone, Polyacrylester genannt.

Bei der Herstellung von Formkörpern durch Granulieren können ebenfalls die üblichen Granulierhilfsmittel wie Wasser, Wasserglas, Stärkelösungen, verdünnte Salpetersäure, verdünnte Ameisensäure verwendet werden.

Ebenso wie bei der Extrusion werden die durch Tablettieren bzw. Granulieren erhaltenen Formkörper zweckmäßig zunächst bei Temperaturen bis zu 200$^{\circ}$C getrocknet und im allgemeinen danach, gegebenenfalls stufenweise, bei Temperaturen von zweckmäßig 200 bis 1100$^{\circ}$C, vorzugsweise 300 bis 1100$^{\circ}$C, calciniert .

Die nachfolgenden Beispiele erläutern die Erfindung.

Beispiel 1

Herstellung der geformten alkalihaltigen Tonerde

a) Pulverförmiger (Korngröße kleiner 0,125 mm) Böhmit ($\alpha$-Aluminiumoxidhydrat) wird mit 3 Gew.-% Magnesiumstearat vermischt und mit einer Tablettiervorrichtung zu Ringtabletten mit den Maßen 5 mm Höhe, 5 mm Außendurchmesser und 2 mm Innendurchmesser verpreßt. Die so
erhaltenen Formlinge werden 3 h bei einer Temperatur
von 550°C getempert. Die röntgenographische Untersuchung
(Pulver-Aufnahme) ergibt, daß danach die Formkörper
aus $\gamma$-Aluminiumoxid als Hauptbestandteil bestehen. Die
getemperten Formkörper weisen eine BET-Oberfläche von
210 m$^2$/g, eine Schüttdichte von 890 kg/m$^3$ und eine
Wasseraufnahme von 0,47 cm$^3$/g auf.

500 g dieser Formlinge werden dann mit 235 cm$^3$ einer
wäßrigen Lösung von NaOH imprägniert. Die Konzentration
von NaOH wird so gewählt, daß nach der Temperaturbehandlung die Tonerde einen Natriumgehalt von 5,9 Gew.-%
bezogen auf die Gesamtmasse aufweist. Die imprägnierte
Tonerede wird anschließend 12 h bei 120°C und danach
1 Stunde bei 300°C getempert.

b) Aus pulverförmigem Böhmit werden unter Zusatz von geringen
Mengen Salpetersäure kugelförmige Formkörper mit einem
Durchmesser von 2 bis 4 mm hergestellt. Diese Formkörper
werden zunächst bei 200°C getrocknet und dann 1 Stunde
bei 1000°C getempert. Die röntgenographische Untersuchung
(Pulver-Aufnahme) ergibt, daß danach die Formkörper aus
$\eta$-Aluminiumoxid als Hauptbestandteil bestehen. Die
spezifische Oberfläche der Formkörper beträgt 90 m$^2$/g,
ihr Porenvolumen 0,55 ml/g.

500 g dieser Formkörper werden dann mit 275 cm$^3$ einer
wäßrigen Lösung von NaOH imprägniert. Die NaOH-Konzentration in der Tränklösung wird so gewählt, daß die
Tonerde nach der Temperaturbehandlung einen Natriumgehalt
von 4,7 Gew.-% bezogen auf die Gesamtmasse aufweist. Die
Temperaturbehandlnng der imprägnierten Formkörper wird
entsprechend Beispiel 1 a) durchgeführt.

c) 500 g Ringe aus α-Aluminiumoxid mit einem Außendurchmesser von etwa 8,5 mm, einer Höhe von etwa 8,5 mm und einer Wandstärke von ungefähr 2 mm, einer BET-Oberfläche von 0,6 $m^2$/g und einem Porenvolumen von 0,4 $cm^3$/g werden mit 200 $cm^3$ einer wäßrigen Lösung von NaOH imprägniert. Die NaOH-Konzentration wird so gewählt, daß ein Natriumgehalt von 6,2 Gew.-% bezogen auf die Gesamtmasse resultiert. Die Temperaturbehandlung nach dem Imprägnieren wird entsprechend Beispiel 1a) durchgeführt.

d) 5000 g Böhmit wird mit 500 g Bentonit und 160 g Kartoffelstärke vermischt und mit NaOH-haltigem Wasser angemaischt und im Kneter 1 h verdichtet. Die plastische Masse wird zu Wabenkörpern extrudiert. Die quadratische Grundfläche des erhaltenen quaderförmigen Körpers hat 5 cm Kantenlänge. Die Länge des Quaders selbst beträgt 10 cm. Die 36 inneren Kanäle haben eine quadratische Stirnfläche mit 6 mm lichte Kantenlänge. Die Stärke der inneren Trennwände weist 1,5 mm auf. Der Wabenkörper wird 3 Tage bei Raumtemperatur und danach bei ansteigender Temperatur bis 150°C 4 Stunden getrocknet. Anschließend wird der Formkörper 3 h bei 550°C calciniert. Die röntgenographische Untersuchung (Pulver-Aufnahme) ergibt, daß die Formkörper aus γ-Aluminiumoxid als Hauptbestandteil bestehen. Die spezifische Oberfläche der Formkörper beträgt 170 $m^2$/g. Der Natriumgehalt der Formkörper wird durch die Konzentration an NaOH im Anmaischwasser eingestellt und beträgt 4,1 Gew.-%.

Beispiel 2

Verwendung der geformten alkalihaltigen Tonerde zur Gasreinigung

Je 1 Liter der nach Beispiel 1 a), 1 b), 1 c) hergestellten geformten alkalihaltigen Tonerde wird in einen elektrisch

beheizten, rohrförmigen Stahlreaktor mit 40 mm innerem Durchmesser gefüllt und pro Stunde mit einem Normkubikmeter Stickstoff beaufschlagt. Der Stickstoff enthält als Modellverbindung für zu entfernende saure Verbindungen etwa 6 mg Chlorwasserstoff pro Normkubikmeter, wobei kurzzeitig auch höhere bzw. niedrigere Chlorwasserstoffmengen dosiert werden können. Die Temperatur im Reaktor beträgt bei Verwendung der geformten, alkalihaltigen Tonerde gemäß Beispiel 1 a) Raumtemperatur, gemäß Beispiel 1 b) 90°C und gemäß Beispiel 1 c) 450°C.

Zum Test der nach Beispiel 1 d) hergestellten Wabenkörper werden 10 Körper in einen elektrisch beheizten Reaktor, dessen Geometrie dem Formkörper angepaßt ist, eingefüllt. Der Reaktor wird pro Stunde mit 2 Normkubikmetern Stickstoff beaufschlagt, der ebenfalls 6 mg Chlorwasserstoff pro Normkubikmeter enthält. Die Temperatur im Reaktor beträgt 350°C.

Dem jeweils durch die Feststoffschüttungen aus den Tonerden gemäß den Beispielen 1 a) bis 1 c) geströmten, aus den Reaktoren austretendem Gas werden von Zeit zu Zeit Proben entnommen und darin der Gehalt an Chlorwasserstoff bestimmt. Es ergibt sich, daß bei allen drei Versuchen Chlorwasserstoff quantitativ zurückgehalten wird.

Beim Test der Tonerde gemäß Beispiel 1 a) wird nach 1900 Stunden die geformte, alkalisierte Tonerde in Schichten ausgebaut und der Chlorgehalt der einzelnen Schichten bestimmt. Beim Test der Tonerde gemäß Beispiel 1 b) wird nach 2000 Stunden und beim Test der Tonerde gemäß Beispiel 1 c) nach 1500 Stunden, entsprechend Beispiel 1 a) verfahren, während beim Test der Wabenkörper gemäß Beispiel 1 d) nach 2500 Stunden der Chlorgehalt der einzelnen Wabenkörper bestimmt wird.

0234433

Test der Tonerde gemäß Beispiel 1 a)

Gaseingang ⟶ Gasausgang

Schicht-Nr.

| 1 | 2 | 3 | 4 | 5 | 6 | 7 | 8 | 9 | 10 |
|---|---|---|---|---|---|---|---|---|----|

Chlorgehalt in Gew.-%

| 8,5 | 7,8 | 5,1 | 1,3 | 0,05 | 0,02 | 0,01 | 0,01 | 0,01 | 0,01 |

Test der Tonerde gemäß Beispiel 1 b)

Gaseingang ⟶ Gasausgang

Schicht-Nr.

| 1 | 2 | 3 | 4 | 5 | 6 | 7 | 8 | 9 | 10 |
|---|---|---|---|---|---|---|---|---|----|

Chlorgehalt in Gew.-%

| 9,3 | 7,7 | 2,3 | 0,3 | 0,05 | 0,03 | 0,01 | 0,01 | 0,01 | 0,01 |

Test der Tonerde gemäß Beispiel 1 c)

Gaseingang ————————————⟶ Gasausgang

Schicht-Nr.

| 1 | 2 | 3 | 4 | 5 | 6 | 7 | 8 | 9 | 10 |
|---|---|---|---|---|---|---|---|---|---|

Chlorgehalt in Gew.-%

| 9,8 | 6,2 | 2,5 | 0,4 | 0,06 | 0,03 | 0,01 | 0,01 | 0,01 | 0,01 |

Test der Wabenkörper gemäß Beispiel 1 d)

Gaseingang ————————————⟶ Gasausgang

Wabenkörper-Nr.

| 1 | 2 | 3 | 4 | 5 | 6 | 7 | 8 | 9 | 10 |
|---|---|---|---|---|---|---|---|---|---|

Chlorgehalt in Gew.-%

| 7,4 | 4,8 | 0,4 | 0,06 | 0,02 | 0,02 | 0,01 | 0,01 | 0,01 | 0,01 |

Die Ergebnisse zeigen, daß mit dem erfindungsgemäßen Verfahren saure Verbindunge vollständig aus einem Gasstrom abgetrennt werden. Besonders vorteilhaft ist, daß die Hauptmenge an Chlorwasserstoff bereits in den obersten Schichten abgefangen wird, so daß die Schüttung der geformten, alkalisierten Tonerde nahezu vollständig ausgenützt werden kann, ohne daß ein Durchbruch der zu entfernenden Komponenten befürchtet werden muß.

0234433

Beim Ausbau der geformten, alkalisierten Tonerde wurde in keinem der Beispiele Staub festgestellt, so daß auch kein Druckverlustanstieg bemerkt wurde. Die Härte bzw. die Festigkeit der Formkörper verringerte sich durch die Aufnahme von Chlorwasserstoff nicht.

'0234433

Patentansprüche

1. Verfahren zur Reinigung eines mit sauren Verbindungen verunreinigten Gases, dadurch gekennzeichnet, daß das Gas durch ein Festbett von geformter, alkalihaltiger Tonerde geleitet wird.

2. Verfahren nach Anspruch 1, dadurch gekennzeichnet, daß das Gas als saure Verbindungen Halogenverbindungen, insbesondere Halogenwasserstoffe, Schwefelwasserstoff, Schwefeldioxid, Schwefeltrioxid und/oder Stickoxide enthält.

3. Verfahren nach Anspruch 1 und 2, dadurch gekennzeichnet, daß das Gas Chlorwasserstoff enthält.

4. Verfahren nach Anspruch 1 bis 3, dadurch gekennzeichnet, daß das Gas die sauren Verbindungen in einer Konzentration von etwa 1 bis 1000 Vol.-ppm enthält.

5. Verfahren nach Anspruch 1 bis 4, dadurch gekennzeichnet, daß saure Verbindungen enthaltende Luft oder ein saure Verbindungen enthaltendes luftähnliches Gemisch aus Stickstoff und Sauerstoff gereinigt werden.

6. Verfahren nach Anspruch 1 bis 4, dadurch gekennzeichnet, daß das zu reinigende Gas aus wenigstens einer der Komponenten Wasserdampf, Stickstoff, Methan, Kohlenmonoxid, Kohlendioxid oder Wasserstoff besteht.

7. Verfahren nach Anspruch 1 bis 4, dadurch gekennzeichnet, daß das Gas aus einem Reformergas besteht.

8. Geformte, alkalihaltige Tonerde nach Anspruch 1, dadurch gekennzeichnet, daß die Tonerde zwischen 1 und 20 Gew.-%

Alkali, bezogen auf die Gesamtmasse aus Tonerde und Alkalimetall enthält.

9. Geformte, alkalihaltige Tonerde nach Anspruch 1 und 8, dadurch gekennzeichnet, daß die Tonerde zwischen 1 und 20 Gew.-% Natrium, bezogen auf die Gesamtmasse aus Tonerde und Alkalimetall, enthält.

10. Geformte, alkalihaltige Tonerde nach Anspruch 1, 8 und 9, dadurch gekennzeichnet, daß die Tonerde im wesentlichen aus einem oder mehreren Oxiden des Aluminiums besteht.

11. Verfahren nach Anspruch 1 bis 10, dadurch gekennzeichnet, daß alkalihaltige Tonerde in Kugelform mit einem Durchmesser von 2 bis 10 mm eingesetzt wird.

12. Verfahren nach Anspruch 1 bis 10, dadurch gekennzeichnet, daß alkalihaltige Tonerde in Ringform mit einem Außendurchmesser von 4 bis 20 mm, einer Höhe von 3 bis 20 mm und einer Wandstärke von mindestens 1 mm eingesetzt wird.

13. Verfahren nach Anspruch 1 bis 10 und 12, dadurch gekennzeichnet, daß die alkalihaltige Tonerde aus Ringen besteht, die drei oder mehr Zwischenwände (Trennwände) enthalten, wobei die Trennwände in diametralen, zueinander senkrechten Ebenen angeordnet sind und zwischeneinander etwa gleiche Winkel bilden.

14. Verfahren nach Anspruch 1 bis 10, dadurch gekennzeichnet, daß alkalihaltige Tonerde in Wabenform eingesetzt wird.

0234433

15. Verfahren nach Anspruch 1 bis 10 und 14, <u>dadurch gekennzeichnet</u>, daß die alkalihaltige Tonerde in Wabenform keramische Zusätze in Anteilen zwischen 0 und 80 Gew.-%, vorzugsweise zwischen 2 und 60 Gew.-% enthält.

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-3 943 226 (A.M.R. DIFFORD) <br><br> * Insgesamt * <br><br> --- | 1-7,9-13 | B 01 D 53/34 |
| X | US-A-3 808 774 (A.J. TELLER) <br><br> * Insgesamt * <br><br> ----- | 1-5,8-11 | |

| | RECHERCHIERTE SACHGEBIETE (Int. Cl.4) |
|---|---|
| | B 01 D 53/00 |

Der vorliegende Recherchenbericht wurde für alle Patentansprüche erstellt.

| Recherchenort | Abschlußdatum der Recherche· | Prüfer |
|---|---|---|
| DEN HAAG | 09-04-1987 | POLESAK, H.F. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82